Europäisches Patentamt

European Patent Office

Office européen des brevets

(11) Publication number: **0 083 960**
**B1**

(12) **EUROPEAN PATENT SPECIFICATION**

(45) Date of publication of patent specification: **27.11.85**

(21) Application number: **83300007.8**

(22) Date of filing: **04.01.83**

(51) Int. Cl.⁴: **C 04 B 38/10,** C 04 B 26/02, C 04 B 26/28, C 04 B 32/02, E 04 B 1/82

(54) **Sprayable acoustical composition.**

(30) Priority: **06.01.82 US 337546**

(43) Date of publication of application:
**20.07.83 Bulletin 83/29**

(45) Publication of the grant of the patent:
**27.11.85 Bulletin 85/48**

(84) Designated Contracting States:
**DE FR GB NL SE**

(56) References cited:
**WO-A-81/00105**
**AU-B- 411 993**
**FR-A-2 450 860**
**FR-A-2 481 730**

(73) Proprietor: **UNITED STATES GYPSUM COMPANY**
**101 South Wacker Drive**
**Chicago, Illinois 60606 (US)**

(72) Inventor: **O'Connell, Daniel D.**
**133 Dartmoor Drive**
**Crystal Lake Illinois 60014 (US)**
Inventor: **Broz, Thomas A.**
**5485-C Hampton Court**
**Willoughby Ohio 44094 (US)**

(74) Representative: **Rowe, Eric Nielsen et al**
**Edward Evans & Co. Chancery House 53-64**
**Chancery Lane**
**London WC2A 1SD (GB)**

Courier Press, Leamington Spa, England.

**Description**

This invention relates to a sprayable acoustical composition for application to ceilings, walls, columns, pillars, I-beams and other structural elements of buildings. It further relates to seamless, lightweight, fire-resistant, textured coatings for concrete, cement board, steel and other substrates in said structural elements.

Acoustical tiles and panels are the ubiquitous products in the field of architectural acoustics. Still, such products have drawbacks, too, such as the ubiquitous seams. Apparently seamless arrays of tiles presenting apparently random designs have been the goal of the acoustical tile industry for many years.

One way to achieve the seamless, patternless look is to spray a continuous coating on the structure but the achievement of all or most of the desirable qualities of sound absorbing compositions in a sprayable form has been a most difficult goal.

It is an object of this invention to provide a dry composition adapted for mixing with water to form a sprayable adherent composition which forms, upon drying, a sound absorbent coating.

According to one aspect of the invention there is provided a floc as set out in Claim 1 of the claims of this specification.

According to another aspect of the invention there is provided a method for forming a monolithic, acoustical, textured surface as set out in Claim 15 of the claims of this specification.

Polyethylene, polypropylene and copolymers of ethylene and propylene are representative of the polyolefins. The average length of the fibers may be from about 0.5 mm to about 5 mm (from about 0.02" to about 0.2") but a preferred range is from about 0.6 to about 3 mm, more preferably from about 0.6 to about 1.5 mm. The amount of polyolefin fibers is preferably about 0.25% to about 6.4% by weight of the foamy composition. The diameter of the fiber ranges from about 10 to about 50 μm (0.01 to 0.05 mm) but it is usually within the range of from about 10 to about 30 μm and preferably it is about 20 μm or less. Thus, the aspect ratio of length to diameter will be from about 10 to about 500 generally and for the preferred fibers it is from about 60 to about 75. The surface area of the fibers is from about 3 to about 15 square meters (about 32 to about 160 sq. ft.) per gram. The moisture content of the fibers in bulk is usually about 5% or less.

The polyolefin fibers constitute from about 1.5% to about 25% by weight of the floc of this invention, that is, the composition prepared for mixture with water to form a sprayable composition. Preferably, the amount is from about 5% to about 15%; particularly preferred is a composition comprising from about 10% to about 13% polyolefin fibers.

The floc also comprises, by weight, from about 25% to about 50% mineral wool, from about 2.0% to about 10% binder, from about 0.5% to about 7% foaming agent and, preferably, a thickener. An inert filler may also be incorporated in an amount of from about 20% to about 30% by weight. Examples of such a filler include calcium carbonate, gypsum, talcs, dolomite, clays, silica, mica, and perlite. A blend of talc and polyolefin fiber is especially useful in this invention. Though the particle size is critical only in relation to passage through the orifice of a spraying apparatus, a filler having a particle size distribution such that substantially all passes through a U.S. Standard Sieve No. 100 is particularly well adapted for use in this invention.

The depth of coverage of the substrate attained upon each pass of the spray gun is proportional to the percentage of mineral wool in the composition. Thus, a one-half inch (1.27 cm) thick layer of acoustical coating will require more passes of a given spray gun nozzle when the composition contains 25% mineral wool than when it contains 50%. It is preferable to use from about 30% to 50% of the wool; a particularly preferred floc contains about 40% or more wool.

The type of mineral wool is not critical. That which is used to form felted insulating blankets is satisfactory. A nodular wool is preferred. Shot formation is concomitant with fiber formation in the production of mineral wool but a wool containing a minimal amount of shot is preferred for the purposes of this invention. Large sizes or large amounts of shot would be avoided for esthetic purposes and to minimize wear and jamming of the spraying apparatus. A blowing wool such as that sold under the Thermafiber trademark by the United States Gypsum Company, one sold under the Red-Top trademark by the Canadian Gypsum Company, and a tile wool such as that sold by the former under the Red-Dot trademark are preferable.

A cold water soluble starch is a preferred binder in the compositions of this invention. The low viscosity, non-ionic starches are especially preferred. Examples of other useful binders include polyvinyl acetate, polyvinyl alcohol, mixtures thereof, modified soy protein, bone glue, and the like. Mixtures of a starch and another binder are also contemplated. A particularly preferred binder is a mixture of the soluble starch and polyvinyl alcohol, respectively constituting from about 2% to about 4% and from about 0.5% to about 1% of the total floc weight.

The foaming agent is usually a surfactant of the sodium sulfonate type but proteinaceous foaming agents are also contemplated as being useful for the purpose. A preferred range of foaming agent concentration is from about 1.5% and up; about 5% or more is especially preferred.

Thickeners, used singly or in combinations of two or more species, usually comprise from about 1 to about 6%, preferably from about 2 to about 5%, of the weight of the dry composition. The methylcellulose ethers, particularly hydroxypropyl methylcellulose, are examples of the thickeners used. Also, a hydroxyalkyl ether of a related polysaccharide, galactomannan gum, may be used alone or in combination

2

with the methylcellulose type. A carboxymethyl cellulose further exemplifies the thickeners. The alkyl groups are lower alkyl.

Additives such as fungicides, rust inhibitors, and fire retardants may also be incorporated into the compositions of this invention. Examples of such are zinc dimethyldithiocarbamate, sodium nitrite, and a chlorinated wax or other halogenated organic compound in conjunction with antimony oxide. Fungicide levels of from about 0.3 to about 0.6%, by weight, are contemplated. The rust inhibitor may constitute from about 0.5 to about 2% of the dry weight. Fire retardants may amount to from about 0.5 to about 10% of the dry weight. Coloring agents such as dyes and pigments may also be included.

A sprayable composition is prepared by mixing from about 35 to about 70 US gallons of water (from about 130 to about 265 liters) with each 100 pounds (45 kilograms) of the floc. Agitation of the mixture is effected with any suitable mixing apparatus for a period of time which is sufficient to build up a good head of foam. Generally, the volume of the foamed mixture is from about 1.4 to about 2.5 times the volume of the initial aqueous mixture. For example, the desired amount of foam is produced by vigorously mixing 50 lbs (22.7 kg) of the floc with 20 US gallons (76 litres) of water for about 10 to 20 minutes. A longer mixing time may cause more foam which may be beneficial but it usually is not economically justified.

Piston type or rotor-stator pumps may be used along with the usual texture spray guns to apply the foamed mixture. In general, a piston pump has a main cylinder and a surge cylinder, the latter of which is connected to a spray gun via a hose. A piston reciprocating within the main cylinder while the cylinder is immersed in the foamed mixture of this invention causes the mixture to be drawn into the cylinder and thence into the surge cylinder and the hose. A second or ram piston completes the voiding of the surge cylinder into the hose and spray gun. Compressed air is introduced into the mixture at the spray gun orifice to atomize the mixture as it is sprayed onto the substrate.

In a rotor-stator pump, a screw turning inside a shaft draws the foamy mixture from a hopper and drives it through the shaft and into a hose connecting the shaft to a spray gun. Again, compressed air atomizes the mixture at the spray nozzle.

The material feed is usually at a pressure of from about 15 p.s.i. to about 35 p.s.i. (about 100 to about 240 kPa) and the atomization pressure is from about 40 p.s.i. to about 70 p.s.i. (about 270 to about 480 kPa). A hopper gun, which depends upon gravity to force the mixture into a spray gun mounted on the hopper, may be used to spray the mixture at the higher atomization pressures.

Steel and other metal surfaces should be primed to promote instant adherence of the wet foamy mixture to the surface as the mixture is being applied. A rust-inhibitive primer is preferred for steel.

The acoustical, textured coating of this invention is the dried residue of the foamed mixture that has been sprayed onto the substrate. Usually, the coating is about 1/2 inch (1.27 cm) thick but it may be within the range of from less than 1/8 inch to more than 1-1/4 inches (0.3 to 3.2 cm). At a thickness of 1/2" (1.27 cm) the coverage of the foamed mixture is about 1.5—2.0 square feet per pound (about 0.3 to 0.4 sq. meters per kg.) of the dry composition. The acoustical, textured coating weighs from about 10 to about 20 pounds per cubic foot (0.16 to 0.32 g/cm$^3$); a one-half inch thick coating weighs about 0.5 pound per square foot (2.44 kg/m$^2$).

The sound absorption capability of the textured coating of this invention compares favorably with that of acoustical tiles and panels. The noise reduction coefficient (NRC) of a one-half inch (1.27 cm) coating is usually about 0.5. Values as low as about 0.35 are considered suitable for some applications and values as high as 0.6 may be attained, as measured either by the ASTMC423-77 method or by use of a sound impedance tube (ASTM384) and conversion of the sound pressure differentials to statistical absorption coefficients by means of London's Curve [A. London, J.A.S.A., 263, (1950)].

The invention is illustrated more specifically by the following examples. The scope of the invention, however, is not restricted to the specific details of these examples.

Example 1

A dry floc incorporating a polyethylene fiber sold under the trademarks Pulpex-E and Lextar by Hercules, Inc. is prepared by tumbling the bulk fiber with mineral wool and other components listed below in a Broughton mixer having two counter-rotating impellers. The fiber has a specific gravity of 0.96%, a melting point of 132°C, a moisture content less than 5%, a surface area of 6—10 m$^2$/g, a diameter of 10—20 µm, and the average length is stated as 0.6—1.2 mm.

Identification of the other components is given below.

**0 083 960**

| Components | % by weight |
|---|---|
| Polyethylene fiber (grade A—H) | 12.0 |
| Nodular mineral wool | 50.0 |
| Calcium carbonate (Quincy #3) | 23.2 |
| Non-ionic starch (cold water soluble)* | 3.0 |
| Polyvinyl alcohol (87—89 mol% hydrolyzed acetate) | 0.5 |
| Sodium alkaryl sulfonate** | 6.0 |
| Hydroxypropyl methylcellulose | 2.0 |
| Hydroxyalkyl ether of galactomannan gum*** | 2.0 |
| Zinc dimethyldithiocarbamate | 0.3 |
| Sodium nitrite | 1.0 |

* Staramic 620 from A. E. Staley
** Calsoft F-90 from Pilot Chemical
*** Aquathix from Tenneco Chemicals

The floc is then mixed with water at a ratio of 39.6 US gallons per 100 pounds of floc (3.31 litres per kg) in a Hobart bakery-type mixer for about three minutes. The foamed mixture is sprayed onto seven mortar patties to various thicknesses and dried for twenty one days. The uncoated patties are 1/2" (1.27 cm) thick and 3-7/8" (9.8 cm) in diameter.

The sound absorbance of the coated patties was tested at four frequencies (250 Hz, 500 Hz, 1000 Hz, and 2000 Hz) by the ASTM 384 method, using a sound impedance tube. The statistical absorption coefficient was determined from a plot of the average difference between the maximum and minimum sound pressures at each frequency along London's curve. The results are given in Table I.

TABLE I

Sound absorption

| | Coating thickness | | | | | | |
|---|---|---|---|---|---|---|---|
| Inches | 1/8 | 1/4 | 3/8 | 1/2 | 5/8 | 3/4 | 1-1/4 |
| Centimeters | 0.31 | 0.63 | 0.95 | 1.27 | 1.58 | 1.90 | 3.17 |
| Sound pressure differential (average) | 36.0 | 27.25 | 26.5 | 22.0 | 22.0 | 22.8 | 17.13 |
| Sound absorption coefficient | 0.15 | 0.38 | 0.41 | 0.53 | 0.53 | 0.51 | 0.68 |

Example 2

A floc like that of Example 1 is prepared except for the following variations: calcium carbonate—27.2%, guar gum instead of the galactomannan gum ether, sodium alkaryl sulfonate (Ultra Wet DS)—3.0%, sodium nitrite—0%. Sufficient water is added to the floc to yield a slurry occupying about twice the volume of the floc. The slurry is agitated vigorously to generate foam and again double the volume.

The foamed mixture is sprayed onto 80 sq. ft. (7.43 m²) of 1.5 inch (38 mm) thick concrete slabs and the slabs are laid on a laboratory floor and fitted tightly together. The thickness of the sprayed-on coating is 0.5 inch (12.7 mm). The Reverberation Room Method (ANSI/ASTM C423-77) is used to determine the sound absorption coefficients of the coated array of slabs. The results of the test are as follows:

4

| 1/3 Octave band center frequency (Hz) | Absorption coefficient |
|---|---|
| 125 | 0.05 |
| 250 | 0.16 |
| 500 | 0.38 |
| 1000 | 0.69 |
| 2000 | 0.85 |
| 4000 | 0.79 |

The average of the coefficients at 250 Hz, 500 Hz, 1000 Hz, and 2000 Hz, expressed to the nearest integral multiple of 0.05, is the NRC which, thus, is 0.50.

**Claims**

1. A floc adaptable for spraying onto a surface to form an acoustical, textured coating thereon, said floc comprising mineral wool, polyolefin fibers, a non-cementitious binder, and a foaming agent.

2. The floc of Claim 1 wherein said polyolefin fibers have an average length of from about 0.5 mm to about 5 mm.

3. The floc of Claim 1 wherein said polyolefin fibers constitute from about 1.5% to about 25% of the weight thereof.

4. The floc of Claim 1 wherein the binder comprises from about 2% to about 10% of a cold water soluble starch, based on the weight of the floc.

5. A floc adaptable for spraying onto a surface to form an acoustical, textured coating thereon, said floc comprising, by weight, from about 25% to about 50% mineral wool, from about 1.5% to about 25% polyolefin fibers, from about 2% to about 10% binder, and from about 0.5% to about 7% foaming agent.

6. The floc of Claim 5 further comprising from about 1% to about 6% thickener, by weight.

7. The floc of Claim 5 or Claim 6 further comprising from about 20% to about 30%, by weight, of a filler.

8. The floc of Claim 6 wherein the thickener is a hydroxyalkyl ether of a polysaccharide.

9. The floc of Claim 8 wherein the thickener is a mixture of a hydroxyalkyl methylcellulose and a hydroxyalkyl ether of galactomannan gum.

10. A composition adapted for spraying onto a surface to form an acoustical, textured coating thereon, said composition comprising the floc of Claim 1, Claim 5, or Claim 6.

11. The composition of Claim 10 characterized further in that it contains from about 35 to about 70 US gallons of water per 100 pounds of floc (282 to 583 litres per 100 kg).

12. A foamed composition suitable for spray application onto a substrate to form an acoustical textured coating thereon, said composition comprising the composition of Claim 10, characterized further in that the volume of the foamed composition is from about 1.4 to about 2.5 times the volume of the composition before being foamed.

13. An acoustical, textured coating on a substrate, said coating being the residue of the foamed composition of Claim 12 after application of said composition to the substrate and drying.

14. The acoustical textured coating of Claim 13 characterized by a density of from about 10 to about 20 pounds per cubic foot (0.16 to 0.32 g/cm$^3$).

15. A method for forming a monolithic, acoustical, textured surface comprising mixing mineral wool, polyolefin fibers, a non-cementitious binder, a foaming agent and water to form a foamy composition, confining said composition under super-atmospheric pressure, releasing it through a nozzle to form a stream, introducing a compressed gas into said stream to atomize the composition, and directing said atomized composition against a substrate.

16. The method of Claim 15 characterized further by selecting polyolefin fibers having an average length of from about 0.5 mm to about 5 mm.

17. The method of Claim 15 wherein the amount of polyolefin fibers is from about 0.25% to about 6.4%, by weight, of the foamy composition.

18. The method of Claim 17 wherein the mixing is sufficient to form a foamed composition having a volume from about 1.4 to about 2.5 times the volume of the unfoamed composition.

19. The method of Claim 15 wherein the foamy mixture is confined at a pressure of from about 15 p.s.i. to about 35 p.s.i. (100 to 240 kPa) and the automization pressure at the nozzle is from about 40 p.s.i. to about 70 p.s.i. (270 to 480 kPa).

5

# 0 083 960

**Patentansprüche**

1. Flockmaterial, das zur Bildung einer akustischen, texturierten Beschichtung auf eine Fläche aufsprühbar ist, gekennzeichnet durch Mineralwolle, Polyolefinfasern, ein nichtklebendes Bindemittel und ein Schäumungsmittel.

2. Flockmaterial nach Anspruch 1, dadurch gekennzeichnet, daß die Polyolefinfasern eine mittlere Länge von etwa 0,5 mm bis etwa 5 mm haben.

3. Flockmaterial nach Anspruch 1, dadurch gekennzeichnet, daß die Polyolefinfasern von etwa 1,5% bis etwa 25% seines Gewichts ausmachen.

4. Flockmaterial nach Anspruch 1, dadurch gekennzeichnet, daß das Bindemittel von etwa 2% bis etwa 10% einer in kaltem Wasser löslichen Stärke umfaßt, bezogen auf das Gewicht des Flockmaterials.

5. Flockmaterial, das zur Bildung einer akustischen, texturierten Beschichtung auf eine Fläche aufsprühbar ist, gekennzeichnet durch etwa 25 bis etwa 50 Gew.-% Mineralwolle, etwa 1,5 bis 25 Gew.-% Polyolefinfasern, etwa 2 bis etwa 10 Gew.-% Bindemittel und etwa 0,5 bis etwa 7 Gew.-% Schämungsmittel.

6. Flockmaterial nach Anspruch 5, gekennzeichnet weiter durch etwa 1 bis etwa 6 Gew.-% eines Dickmittels.

7. Flockmaterial nach Anspruch 5 oder 6, gekennzeichnet weiter durch etwa 20 bis etwa 30 Gew.-% eines Füllmittels.

8. Flockmaterial nach Anspruch 6, dadurch gekennzeichnet, daß das Dickmittel ein Hydroxyalkyläther eines Polysacharides ist.

9. Flockmaterial nach Anspruch 8, dadurch gekennzeichnet, daß das Dickmittel ein Gemisch einer Hydroxyalkyl-Methylcellulose und eines Hydroxylalkyläthers von Galaktomannangummi ist.

10. Mischung, die zur Bildung einer akustischen, texturierten Beschichtung auf eine Fläche aufsprühbar ist, dadurch gekennzeichnet, daß die Mischung das Flockmaterial nach Anspruch 1, Anspruch 5 oder Anspruch 6 enthält.

11. Mischung nach Anspruch 10, dadurch gekennzeichnet, daß sie weiter zwischen etwa 35 und etwa 70 US-Gallonen Wasser pro 100 Pounds Flockmaterial (282 bis 583 Liter pro 100 kg) enthält.

12. Geschäumte Mischung, die zur Bildung einer akustitischen, texturierten Beschichtung auf ein Substrat aufsprühbar ist, wobei die Mischung die Mischung nach Anspruch 10 enthält, dadurch gekennzeichnet, daß weiter das Volumen der geschäumten Mischung das etwa 1,4- bis etwa 2,5-Fache des Volumens der Mischung vor der Schäumung beträgt.

13. Akustische, texturierte Beschichtung eines Substrats, dadurch gekennzeichnet, daß die Beschichtung der Rückstand der geschäumten Mischung nach Anspruch 12 nach deren Aufbringung auf das Substrat und ein Trocknen ist.

14. Akustische, texturierte Beschichtung nach Anspruch 13, gekennzeichnet durch eine Dichte zwischen etwa 10 und etwa 20 lbs/ft$^3$ (0,16 bis 0,32 g/cm$^3$).

15. Verfahren zur Bildung einer monolithischen, akustischen, texturierten Fläche, dadurch gekennzeichnet, daß Mineralwolle, Polyolefinfasern, ein nichtklebendes Bindemittel, ein Schäumungsmittel und Wasser zur Bildung einer schäumenden Mischung gemischt werden, daß diese Mischung in einem Behälter einem überatmosphärischen Druck ausgesetzt und daraus über eine Düse zur Bildung eines Strahles entlassen wird, daß in diesen Strahl zur Zersäubung der Mischung ein Druckgas eingeleitet wird und daß die zerstäubte Mischung gegen ein Substrat ausgerichtet wird.

16. Verfahren nach Anspruch 15, dadurch gekennzeichnet, daß weiter Polyolefinfasern mit einer mittleren Länge von etwa 0,5 mm bis etwa 5 mm verwendet werden.

17. Verfahren nach Anspruch 15, dadurch gekennzeichnet, daß die Polyolefinfasern mit etwa 0,25 bis 6,4 Gew.-% der schäumenden Mischung verwendet werden.

18. Verfahren nach Anspruch 17, dadurch gekennzeichnet, daß das Mischen zur Bildung einer geschäumten Mischung mit einem Volumen durchgeführt wird, welches das etwa 1,4- bis etwa 2,5-Fache des Volumens der ungeschäumten Mischung aufweist.

19. Verfahren nach Anspruch 15, dadurch gekennzeichnet, daß das schäumende Gemisch in dem Behälter einem Druck zwischen etwa 15 und etwa 35 psi (100 bis 240 kPa) unterworfen wird und daß der Zerstäubungsdruck an der Düse zwischen etwa 40 und etwa 70 psi (270 bis 480 kPa) beträgt.

**Revendications**

1. Floc conçu pour être projeté sur une surface pour y former un revêtement acoustique texturé, ce floc comprenant de la laine minérale, des fibres de polyoléfine, un liant autre qu'un ciment et un agent moussant.

2. Floc selon la revendication 1, dans lequel les fibres de polyoléfine ont une longueur moyenne d'environ 0,5 à environ 5 mm.

3. Floc selon la revendication 1, dans lequel les fibres de polyoléfine constituent d'environ 1,5% à environ 25% de son poids.

4. Floc selon la revendication 1, dans lequel le liant comprend d'environ 2% à environ 10% d'un amidon soluble dans l'eau froide, par rapport au poids du floc.

6

**0 083 960**

5. Floc conçu pour être projeté sur une surface pour y former un revêtement acoustique texturé, ce floc comprenant en poids, d'environ 25% à environ 50% de laine minérale, d'environ 1,5% à environ 25% de fibres de polyoléfine, d'environ 2% à environ 10% de liant et d'environ 0,5% à environ 7% d'agent moussant.

6. Floc selon la revendication 5, comprenant en outre d'environ 1% à environ 6% d'épassissant, en poids.

7. Floc selon l'une des revendications 5 ou 6, comprenant en outre d'environ 20% environ 30% en poids d'une charge.

8. Floc selon la revendication 6, dans lequel l'épaississant est un éther hydroxyalkylique d'un polysaccharide.

9. Floc selon la revendication 8, dans lequel l'épassissant est un mélange d'une hydroxyalkyl-méthyl-cellulose et d'un éther hydroxyalkylique de gomme de galactomannane.

10. Composition conçue pour être projetée sur une surface pour y former un revêtement acoustique texturé, cette composition comprenant le floc de la revendication 1, de la revendication 5 ou de la revendication 6.

11. Composition selon la revendication 10, caractérisée en outre en ce qu'elle contient d'environ 35 à environ 70 gallons US d'eau par 100 livres de floc (282 à 583 litres d'eau par 100 kg).

12. Composition mousseuse convenant à l'application par projection sur un substrat pour y former un revêtement acoustique texturé, cette composition comprenant la composition de la revendication 10, caractérisée en outre en ce que le volume de la composition mousseuse est d'environ 1,4 à environ 2,5 fois le volume de la composition avant qu'on ne la fasse mousser.

13. Revêtement acoustique texturé sur un substrat, ce revêtement étant le résidu de la composition mousseuse de la revendication 12 après application de cette composition au substrat et séchage.

14. Revêtement acoustique texturé selon la revendication 13, caractérisé par une masse volumique d'environ 10 à environ 20 livres par pied cubique (0,16 à 0,32 g/cm$^3$).

15. Procédé pour former une surface acoustique texturée monolithique, consistant à mélanger de la laine minérale, des fibres de polyoléfine, un liant autre qu'un ciment, un agent moussant et de l'eau pour former une composition mousseuse, à confiner cette composition sous une pression suratmosphérique, à la libérer à travers une buse pour former un courant, à introduire un gaz comprimé dans ce courant pour atomiser la composition et à diriger la composition atomisée contre un substrat.

16. Procédé selon la revendication 15, caractérisé en outre en ce que l'on choisit des fibres de polyoléfine ayant une longueur moyenne d'environ 0,5 à environ 5 mm.

17. Procédé selon la revendication 15, dans lequel la quantité de fibres de polyoléfine est d'environ 0,25% à environ 6,4% en poids de la composition mousseuse.

18. Procédé selon la revendication 17, dans lequel le mélange est suffisant pour former une composition mousseuse ayant un volume d'environ 1,4 à environ 2,5 fois le volume de la composition non mousseuse.

19. Procédé selon la revendication 15, dans lequel on confine le mélange mousseux à une pression d'environ 15 p.s.i. à environ 35 p.s.i. (100 à environ 240 kPa) et la pression d'atomisation à la buse est d'environ 40 p.s.i. à environ 70 p.s.i. (270 à environ 480 kPa).

7